# EUROPEAN PATENT APPLICATION

(11) **EP 1 868 086 A1**
(43) Date of publication of application: **19.12.2007**
(21) Application number: 06253074.6
(22) Date of filing: 14.06.2006
(51) Int. Cl.: G06F 9/445

(54) **Configuration process**

(71) Applicant: British Telecommunications Public Limited Company, London EC1A 7AJ (GB)
(72) Inventor: Gordon, Colin Nicholas, Cheadle Cheshire SK8 1QQ (GB)
(74) Representative: Lidbetter, Timothy Guy Edwin

(57) **Abstract**

The configuration of several computers 10, 11, 12 may be co-ordinated by generating a plurality of instances of a generic configuration 22 by populating them with data 23, 24 specific to each individual computer to generate a plurality of discrete configuration instances 27, which can be downloaded to the individual computers. By running the process centrally, inconsistencies can be avoided and the timing of the reconfiguration of several devices can be co-ordinated

## Description

This invention relates to a process for configuring general-purpose computers on installation, in particular for computers intended to co-operate as part of a network of computers.to form a network.

A network of co-operating computers must each be individually configured according to a plan such that they interact correctly with each other, in particular to route data between each other, and ensure that such data is transmitted in a form that can be processed by the destination computer.

Conventionally, the roll-out of any new computer system is performed by a technician visiting each site and manually entering the necessary data to configure the computer to perform its designated role in the network (having first installed any hardware required). This can be a time-consuming process. It is also necessary to ensure that such work is programmed accurately to ensure that during the process there are not mismatches in the network between computers already installed or upgraded and those that still await the process. In prior art arrangements, such configuration would be done manually, on site, by the person installing the hardware, using a keyboard or other data entry means. However, this may result in interface problems with servers that have yet to be updated, and/or have not been prepared for the re-configuration of the servers currently being attended to. Problems can arise if the technician installs the server in a way other than that intended, either through error or expedience, as this may cause consequential difficulties elsewhere in the system, particularly if the change is not documented.

The *Altiris* product *'Deployment Server'* could also be used, although this method would still require additional manual configuration.

According to the present invention, there is provided a process for configuring one or more computers connected to a communications network, in which a plurality of instances of a generic configuration are populated with data specific to each individual computer to generate a plurality of discrete configuration instances, and the specific configuration instances are downloaded over the communications network to the individual computers to which the respective specific data relate.

This process removes much of the scope for error in the process as the configuration process can be run by a single individual at one location over a short time period, and can ensure all the configurations are compatible before finalising them. This also assists in co-ordinating the times of changes as all the downloads can be effected simultaneously, minimising the transition time, or in a predetermined sequence. Site visits may be necessary if new hardware is to be installed, but this can be done in advance - actual commissioning does not require the presence of a technician.

In a preferred arrangement, data is extracted from first and second data sources relating to a hardware instance, which are used to generate configuration instructions for each instance of the generic installation. The data extracted is used to generate configuration instructions for each instance of the generic installation, tailored to the purposes required and the hardware installed for that instance. The data in respect of the hardware to be configured for each site is extracted from a database of a plurality of such hardware items, the individual hardware item being identified in the first data source by a designation also applied to the function data for the same site in the second data source.

By operating this process centrally, a consistent approach can be maintained, the process can be expedited, and incompatibilities can be identified and resolved before actual installation has taken place.

The configuration instructions may be used to generate a simulation of the system to be configured, the configuration instructions being modified in response to the results of such simulation before installation in the real system.

An embodiment of the invention will now be further described, by way of example only, with reference to the drawings, in which:
Figure 1 is a schematic illustration of a network suitable for application of the invention
Figure 2 is a schematic illustration of the elements that co-operate to perform the invention
Figure 3 is a flow diagram illustrating the information flows carried out during performance of the invention.

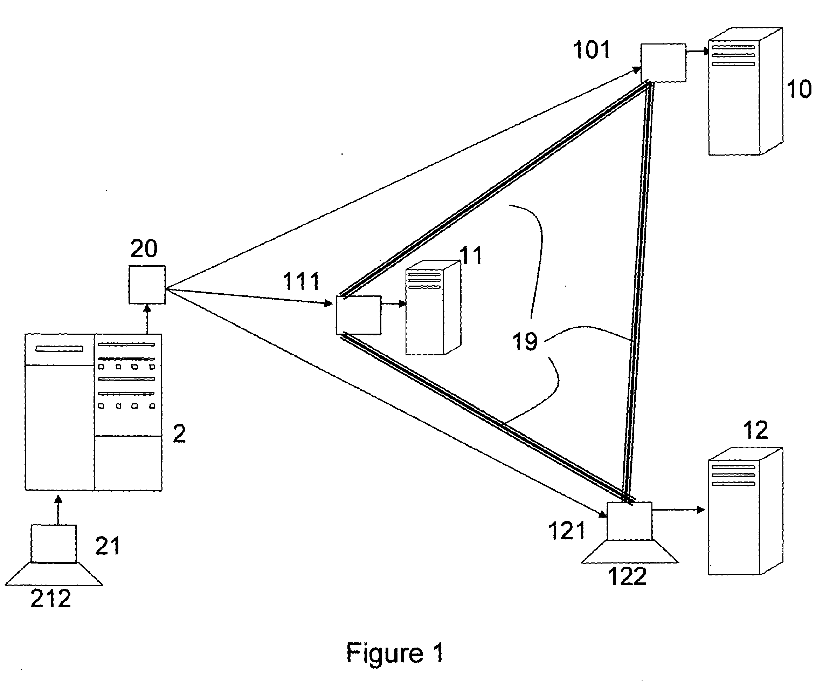

Figure 1 depicts a simple communications network comprising three servers 10, 11, 12, each having an associated communications interface 101,111, 121 interconnected over a switched network 19 such as a packet switching network. In prior art systems reconfiguration is performed by manual entry at each site 10, 11, 12, using a keyboard 122 or the like. In the present invention a master server 2 is provided, which has communication output means 20 which can deliver configuration data to the individual servers 10, 11, 12 through the respective communications interfaces 101, 111, 121. The data may be delivered over a separate communications channel as shown, but more conveniently may use the same network 19 that the servers use to communicate between each other. The master server 2 also has data input means 21 by which configuration data may be supplied to the server 2. Such data may be input manually, e.g. using a keyboard 212, or by means of a physical data carrier, or over a communication link, or by a combination of these.

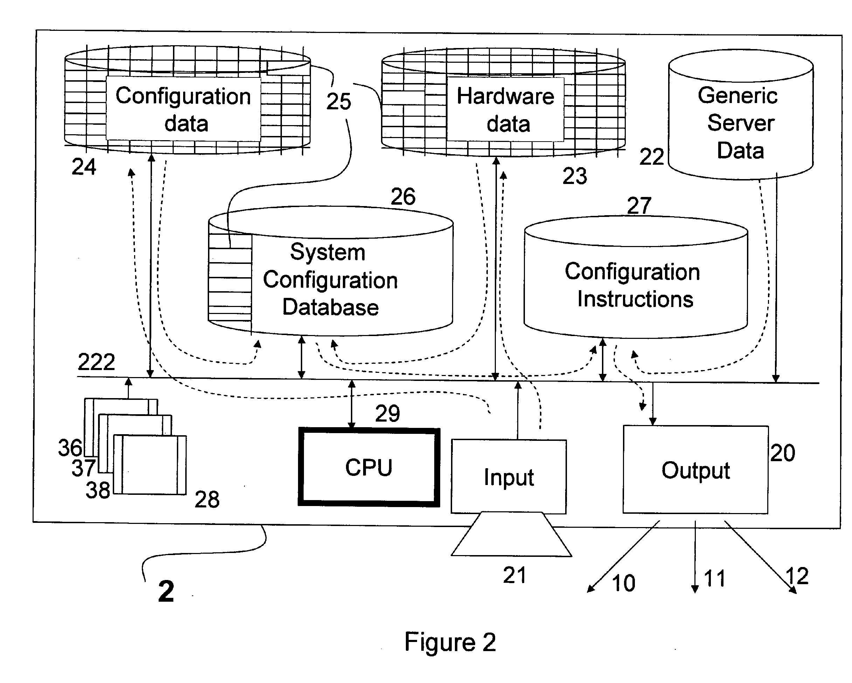

Figure 2 depicts a typical architecture for the computer 2 on which software implementing the master server can be run. The computer comprises a central processing unit (CPU) 29 for executing computer programs and managing and controlling the operation of the computer. The CPU 29 is connected to a number of devices via a bus 222, the devices including a storage device 28 for example a hard disk drive for storing system and application software, and further storage such as ROM and RAM for storing data 23, 24, 26, 27. The computer can also include user input/output devices 20, 21 connected to the bus 222. It will be understood by the skilled person that the above described architecture is not limiting, but is merely an example of a typical computer architecture. It will be further understood that the described computer has all the necessary operating system and application software to enable it to fulfil its purpose.

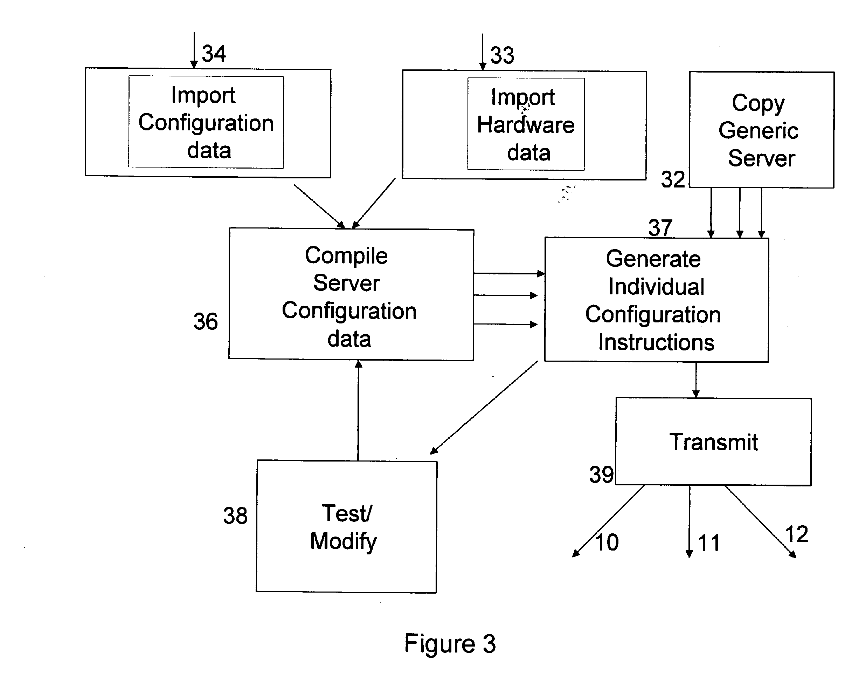

Figure 3 is a flow diagram illustrating the processes performed by the elements of Figure 2. It will be understood that these elements may be embodied in software controlling a general-purpose computer 2 connected to the network depicted in Figure 1, such that the computer 2 performs the steps depicted in Figure 3.

A preliminary stage in the process is to install any hardware necessary at the servers 10, 11, 12. This installation includes ensuring that the network connections for all of the servers have been made, the network switches to which the servers are connected have been configured, any firewall rules have been implemented, and the Domain each of the servers is to join is accessible from the relevant sub-nets. This last point is most important, as failure to connect to the domain will prevent the build from being successful.

The hardware 10, 11, 12 is capable of configuration in response to subsequent inputs received at the respective input device 101, 111, 121.

The build and configuration process shown in Figure 3 is in three parts; the first being the creation of the generic server template 22 (step 32), the second being the preparation of that template for deployment (steps 33, 34, 36, 37, 38) and the third, the actual configuration of the servers 10, 11, 12 (step 39).

The generic operating system template 22 is tailored during the deployment process to take on the necessary design characteristics of the server being deployed. The creation of the generic template itself must be carefully controlled to ensure all necessary actions are included prior to its use. However, once this is done, it will not be necessary to repeat this step. Once a suitable template exists from which servers can be built, this template can be re-used as many times as required.

All servers 10, 11, 12 deployed using the process must meet predetermined software specifications. This requirement is met, where possible, by installing the required applications, permissions, and default settings in the generic template 22. Others are installed as part of the individual servers' final configurations stored at 27. Such specifications include security settings, common registry addressing arrangements, enabling certain management functions and disabling others that might interfere with the required applications.

The process shown in Figure 3 allows the servers 10, 11, 12 to be configured using documentation provided by a design team under the control of a single master server 2. Following installation of the hardware shown in Figure 1, the system allows servers to be built without any human interaction, minimizing the possibility of the introduction of manual errors during the build process. All server configuration data used during the build process is extracted directly from the information provided by the designers or from static design information, making these the only points where errors can be introduced to the server build process, and ensuring servers are built using the correct information and parameters. The build and configuration process combines information provided by the designers with hardware-specific information supplied by the hardware provider.

The preferred embodiment is based upon the *Hewlett Packard* product *Remote Deployment Package (RDP),* which uses the *Altiris* product *Deployment Server.* This product provides a graphical user interface (GUI) that allows servers to be built using "drag-and-drop" by coalescing a pre-defined build job, that contains an operating system build details, with a pre-defined or discovered server. Once built, the server is configured using a process which initiates server specific scripts generated earlier in the build process, using the details provided by the design team. The present invention makes use of this system by defining and applying specific configuration information to a template that contains features common to all the build jobs to be implemented.

The server 2 comprises input and output devices 21, 20, the latter at least being in communication with a communications network, which may be the same communications network 19 that interconnects the computers 10, 11, 12,. The server 2 is under the overall control of a central processor 29, and also comprises a number of data stores 23, 24, 26, 27 and a store 28 for programming instructions to run the processes 36, 37, 38 etc depicted in Figure 3

The various component information needed to build servers is held in a SQL database 26, named the *System Configuration Database (SCDB),* and used to generate the server-specific build data 27. The *SCDB* 26 is populated using a process tool called the *CSIS Importer* using configuration data imported from two spreadsheets 23, 24. The first spreadsheet 23 is supplied by the hardware provider and contains data relating to the computer hardware and its configuration. The other spreadsheet 24 is compiled by the system designer (step 34), to store the data required to configure the network, such as the lP addresses that are to be allocated to the computers 10, 11, 12. The design work (step 34) may be done offline, and the results subsequently loaded into the store 24, or it may be performed on the computer 2 itself, using the input device 21.

To ensure each server 10, 11, 12 is configured correctly, the chosen hardware supplier is supplied with a *Deployment Spreadsheet* containing high-level information for the tranche of servers to be deployed, including their hardware types, host names 25 and ip address. The hardware supplier is asked to update the spreadsheet with the *MAC Address* of the hardware allocated to each host. This updated spreadsheet is then passed into a macro which creates an output file 23.

The data from the two spreadsheets is collated by means of a "common host name" 25, which allows the data 23 relating to an item of hardware 10, 11, 12 to be associated with data 24 relating to the network location at which that hardware is installed.

The *CSIS* Import process 36 uses a *Microsoft SQL DTS* package to extract and validate the data from the hardware spreadsheet 23 and the design spreadsheet 24. The validated extracted data is then used to populate the SCDB 26. The "common host name" field 25 contained in the source data spreadsheets 23 and 24 ensures there is a direct correlation between the hardware supplied and the servers to be deployed, ensuring all necessary information is available prior to the start of server deployment.

The next stage in the process is to populate a server configuration database 26 (step 36). This is done by extracting the data required for each computer from the configuration spreadsheet 24. This data includes the common host name 25, which can be used to identify and extract the required data relating to the server 10,11,12 from the hardware spreadsheet 23.

The preferred embodiment is designed to build a number of servers 10, 11, 12 at the same time. When the database 26 has been populated, all of the information necessary to configure that particular tranche of servers is in place.

The data in the database 26 specific to each server 10, 11, 12 can then be used to generate configuration instructions for each server (step 37). A master or "generic" server template 22 is used to provide the details common to all the servers to be configured.

The configuration files 27 are in a form that allows them to be executed on the respective end servers 10, 11, 12, so allowing the relevant data to be applied when the file is executed on the destination servers 10, 11, 12.

The use of the template 22 saves considerable time as it only needs to be generated once, and it ensures that all the resulting servers 10, 11, 12 conform to the same design criteria. The generic server template 22 is copied and installed on each computer to be installed, which is initiated using a "drag and drop" process. Specific configuration instruction files 27 for each computer are generated from the SCDB 26 as part of this process 37, copied to the respective computers using the output 20 and used during the computer configuration process

At this stage, the details of the proposed configuration of each server 10, 11, 12 are all held in one database 27. It is therefore possible to run tests 38 on these models, using test programmes 28 stored in the server 2, to ensure the network will operate as intended, and to modify the configuration data 26 if required.

Preparation for the computer installation to take place involves reserving IP addresses for each computer. This is done by running a script file that is generated using information extracted from the design spreadsheet 24. Once the operator is satisfied with the configuration, the configuration instructions can be extracted from the store 27 and transmitted through the output 20 to each server 10, 11, 12 (step 39).

The timing of the instructions can be arranged to be simultaneous, or in a predetermined sequence, in order to effectively utilise the network, or to meet any other operational criteria. As this is controlled centrally, it is not necessary to co-ordinate the activities of a number of technicians.

As will be understood by those skilled in the art, any or all of the software used to implement the invention can be contained on various transmission and/or storage mediums such as a floppy disc, CD-ROM, optically readable marks, magnetic media, punched card or tape, so that the program can be loaded onto one or more general purpose computers or downloaded over a computer network using a suitable transmission medium.

## Claims

1. A process for configuring one or more computers connected to a communications network, in which a plurality of instances of a generic configuration are populated with data specific to each individual computer to generate a plurality of discrete configuration instances" and the specific configuration instances are downloaded over the communications network to the individual computers to which the respective specific data relate.

2. A process according to claim 1, in which data is extracted from first and second data sources relating to a hardware instance, which are used to generate configuration instructions for each instance of the generic installation.

3. A process according to claim 1 or claim 2, wherein the configuration instructions are used to generate a simulation of the system to be configured, and the configuration instructions are arranged to be modified in response to the results of such simulation.

4. A process according to any preceding claim, in which the timings of the downloading processes for a plurality of computers are co-ordinated.

5. A process according to any preceding claim, wherein the data in respect of each hardware item to be configured is extracted from a database of a plurality of such hardware items, and wherein the individual hardware item is identified in the first data source by a designation also applied to the function data for the same hardware in the second data source.

6. Apparatus for configuring one or more computers connected to a communications network, comprising means for generating a plurality of instances of a generic configuration, means for populating each instance with data specific to a respective computer to generate a plurality of discrete configuration instances, and means for transmitting the specific configuration instances to the individual computers to which the respective specific data relate.

7. Apparatus according to claim 6, comprising means for extracting data from first and second data sources relating to a hardware instance, and combining the extracted data to generate configuration instructions for each instance of the generic installation.

8. Apparatus according to claim 6 or claim 7, comprising simulation means for generating a simulation of the system to be configured using the configuration instructions, means for testing the simulation so generated, and means for modifying the configuration instructions in response to the results of such simulation.

9. Apparatus according to claim 6, 7 or 8, wherein the transmission means comprises means for co-ordinating the timings of the downloading processes for a plurality of computers.

10. A computer program for use with one or more computers to carry out the method as set out in any one of claims 1 to 5 or to provide any of the apparatus as set out in any one of claims 6 to 9.
